# EUROPÄISCHE PATENTSCHRIFT

(11) **EP 1 100 691 B1**
(45) Veröffentlichungstag und Bekanntmachung des Hinweises auf die Patenterteilung: **28.08.2002**
(21) Anmeldenummer: 99938241.9
(22) Anmeldetag: 14.07.1999
(51) Int. Cl.: B60K 17/356, B60K 17/10

(54) **HYDROSTATISCHER FAHRANTRIEB MIT DIFFERENTIALSPERRE**
HYDROSTATIC DRIVE WITH DIFFERENTIAL LOCK
TRANSMISSION HYDROSTATIQUE A BLOCAGE DU DIFFERENTIEL

(30) Priorität: 28.07.1998 DE 19833942
(43) Veröffentlichungstag der Anmeldung: 23.05.2001
(73) Patentinhaber: BRUENINGHAUS HYDROMATIK GMBH, 89275 Elchingen (DE)
(72) Erfinder: ESSIG, Heinz-Gerhard, D-89173 Lonsee (DE); SHRIVE, Chris P., Dunfermline, Fife KY12 8AA (GB)
(74) Vertreter: Körfer, Thomas, Dipl.-Phys.
(86) Internationale Anmeldenummer: EP9904977
(87) Internationale Veröffentlichungsnummer: WO00006408

(56) Entgegenhaltungen:
- EP-A- 0 025 372
- EP-A- 0 378 742
- FR-A- 2 719 001
- US-A- 4 570 441
- US-A- 4 606 428

## Beschreibung

Die Erfindung betrifft einen hydrostatischen Fahrantrieb nach dem Oberbegriff des Anspruches 1.

Aus der EP 0 378 742 A2 ist ein hydrostatischer Fahrantrieb nach dem Oberbegriff des Anspruches 1 bekannt. Der aus dieser Druckschrift hervorgehende hydrostatische Fahrantrieb besteht aus zwei im Kurven-Fahrbetrieb voneinander getrennten hydraulischen Kreisläufen, wobei in jedem hydraulischen Kreislauf eine Hydropumpe und ein Hydromotor vorgesehen sind. Die beiden Hydropumpen werden über eine gemeinsame Antriebswelle von einem Antriebsmotor, beispielsweise einem Dieselmotor, angetrieben. Die Hydromotoren treiben über ein geeignetes Getriebe jeweils ein Kettenlaufwerk an, beispielsweise das linksseitige Kettenlaufwerk und das rechtseitige Kettenlaufwerk eines Baggers.

Im Geradeaus-Fahrbetrieb tritt das Problem auf, das die linksseitige und rechtsseitige Antriebskette einem unterschiedlichen Schlupf unterworfen sein können. Im Extremfall kann eine der beiden Antriebsketten vollständig durchdrehen. Dieses Problem wird bei der EP 0 378 742 A2 dadurch behoben, daß die Antriebswellen der beiden Hydromotoren im Falle des Geradeaus-Fahrbetriebs durch eine elektromagnetisch betätigbare Kupplung starr miteinander verbunden werden. Um die elektromagnetisch betätigbare Kupplung mit den beiden Hydromotoren zu verbinden, sind zusätzliche Gelenke erforderlich. Der mechanische Aufwand zur Verbindung der beiden Hydromotoren ist erheblich, so daß eine kostengünstige Realisierung des aus der EP 0 378 742 A2 hervorgehenden hydrostatischen Fahrantriebs nicht möglich ist.

Zur Verbesserung der Geradeaus-Fahreigenschaften wird ferner vorgeschlagen, durch elektromagnetisch betätigbare Ventile im Falle des Geradeaus-Fahrbetriebs die beiden im Kurven-Fahrbetrieb getrennten hydraulischen Kreisläufe miteinander zu verbinden, um ungleiche Druckverhältnisse in den beiden hydraulischen Kreisläufen durch Querströmungen auszugleichen.

Ein ähnlicher Stand der Technik geht aus der DE 30 38 175 A1 hervor. Auch dort wird vorgeschlagen, zur Verbesserung der Geradeaus-Fahreigenschaften im Geradeaus-Fahrbetrieb die beiden antriebsseitigen Hydromotoren mittels einer hydraulisch betätigbaren Direktkupplung und geeignete Getriebe miteinander zu verbinden und ferner die beiden hydraulischen Kreisläufe im Falle des Geradeaus-Fahrbetriebs über ein Verbindungsventil parallel miteinander zu verbinden. Auch hier ist der konstruktive Aufwand für die mechanische Verbindung der beiden Antriebsstränge erheblich.

Der Erfindung liegt die Aufgabe zugrunde, einen hydrostatischen Fahrantrieb zu schaffen, bei welchem gute Geradeaus-Fahreigenschaften insbesondere bei einem Schlupf an einem der Antriebsstränge gewährleistet ist, der jedoch kostengünstig realisierbar ist.

Die Aufgabe wird durch die kennzeichnenden Merkmale sowohl des Anspruchs 1 als auch des Anspruchs 7 jeweils in Verbindung mit den gattungsbildenden Merkmalen gelöst.

Der erfindungsgemäßen Lösung nach Anspruch 1 liegt die Erkenntnis zugrunde, daß durch ein abwechselndes, serielles Hintereinanderschalten der ersten Hydropumpe, gefolgt von dem ersten Hydromotor, gefolgt von der zweiten Hydropumpe, gefolgt von dem zweiten Hydromotor sich eine starre Kopplung der Hydromotoren mit den Hydropumpen erreichen läßt. Bei dem erfindungsgemäß verfolgten Konzept sind die Hydropumpen und Hydromotoren daher seriell zueinander angeordnet, während bei den bisher üblichen hydrostatischen Fahrantrieben die Hydropumpen und die Hydromotoren entweder in getrennten hydraulischen Kreisläufen angeordnet sind oder diese getrennten hydraulischen Kreisläufe im Geradeaus-Fahrbetrieb so zusammengeschaltet werden, daß sämtliche Hydromotoren und Hydropumpen parallel zueinander angeordnet sind. Wenn bei dieser konventionellen Ausgestaltung der Antriebsstrang Aus der EP 0 025 372 A1 ist ein hydrostatisches Triebwerk für die Translation und Lenkung mit hydraulischer Leistungsrückführung in Kurven auf schweren Kettenfahrzeugen oder schweren Fahrzeugen mit Antriebsrädern ohne Lenkung bekannt, welches zwei hydrostatische Translationsgetriebe aufweist, die beiderseits des Fahrzeugs wirken, und einem Lenkungsgetriebe, wobei das hydrostatische Translationsgetriebe aus zumindest einer Pumpe mit veränderlichem Hubraum besteht, die mittels eines Medium-Verteilerkreises jeweils zumindest einen ersten Hydraulikmotor und zumindest einen Pumpenmotor mit veränderlichem Hubraum speist, wobei der Hydraulikmotor und der Pumpenmotor beiderseits des Fahrzeugs angebracht sind. Dabei ist jeweils der erste Motor des jeweiligen Translationsgetriebes mechanisch mit jedem Pumpenmotor der an der entgegengesetzten Seite des Fahrzeugs gelegenen Kraftübertragung verbunden. eines der beiden Hydromotoren einen großen Schlupf erfährt oder im Extremfall durchdreht, fließt der Hauptförderstrom hauptsächlich durch diesen mit dem durchdrehenden Antriebsstrang verbundenen Hydromotor, was dessen Drehzahl zusätzlich erhöht, so daß der hydrostatische Fahrantrieb unwirksam wird. Bei der erfindungsgemäßen Lösung hingegen wird der von den Hydropumpen geförderte Förderstrom zwangsweise durch die Hydropumpen sämtlicher Antriebsstränge geführt, so daß das Schluckvolumen beider Hydromotoren übereinstimmt. Die Hydromotoren stützen sich hydraulisch jeweils an der vorgeschalteten Hydropumpe ab, so daß ein übermäßiger Schlupf oder ein Durchdrehen der mit den Hydromotoren verbundenen Antriebsstränge vermieden ist.

Die Ansprüche 2 bis 6 betreffen vorteilhafte Weiterbildungen des hydrostatischen Fahrantriebs nach Anspruch 1.

Entsprechend Anspruch 2 ist vorteilhafterweise ein Wechselventil vorgesehen, das einen Wechsel von dem Geradeaus-Fahrantrieb zu einem Kurven-Fahrantrieb ermöglicht. In dem Kurven-Fahrantrieb sind die beiden Hydromotoren und die beiden Hydropumpen voneinander getrennt und in separaten hydraulischen Kreisläufen jeweils miteinander verbunden. In dem Geradeaus-Fahrantrieb sind die Hydropumpen und Hydromotoren jedoch wie vorstehend beschrieben seriell abwechselnd zueinander angeordnet. Entsprechend Anspruch 3 kann ein solches Wechselventil als einfaches 4/2-Wegeventil mit einer parallelen und einer gekreuzten Schaltstellung kostengünstig realisiert werden.

Entsprechend Anspruch 4 können zu dem ersten und zweiten Hydromotor noch ein dritter und vierter Hydromotor hinzukommen, wobei der dritte Hydromotor zu dem ersten Hydromotor und der vierte Hydromotor zu dem zweiten Hydromotor parallel geschaltet sind. Die einzelnen Hydromotoren treiben dabei beispielsweise vier Antriebsräder an, wobei der erste und dritte Hydromotor einer ersten Fahrzeugachse und der zweite und vierte Hydromotor einer zweiten Fahrzeugachse zugeordnet sein können. Zum Abschalten jeweils einer der Fahrzeugachsen können entsprechend Anspruch 5 Schaltventile vorgesehen sein, die die entsprechenden Hydromotoren abschalten. Beim Abschalten der Hydromotoren ist es entsprechend Anspruch 6 vorteilhaft, die abgeschalteten Hydromotoren über eine Einspeiseeinrichtung mit einem Speisedruck zu versorgen. Dadurch wird vermieden, daß die abgeschalteten Hydromotoren ohne Verbindung mit dem Druckfluid mitlaufen. Durch die erfindungsgemäße Weiterbildung wird sichergestellt, daß die Hydromotoren zumindest mit dem Einspeisedruck der Einspeiseeinrichtung beaufschlagt sind, so daß eine ausreichende Schmierung und Kühlung der Hydromotoren gewährleistet ist.

Der Lösung nach Anspruch 7 liegt die Erkenntnis zugrunde, daß ein schlupffreier hydraulischer Fahrantrieb auch durch Verwendung von Doppel-Motoren in einer besonderen kreuzweisen Mischhaltung realisiert werden kann. Da sämtliche Hydromotoren nicht nur mit einer Hydropumpe, sondern die beiden Teil-Hydromotoren entweder eingangsseitig oder ausgangsseitig mit beiden Hydropumpen verbunden sind, ist sichergestellt, daß sich die Hydromotoren beider Antriebsstränge an beiden Hydropumpen abstützen. Durch die erfindungsgemäße Maßnahme wird vermieden, daß bei einem Schlupf oder gar Durchdrehen eines der Antriebsstränge der von den Hydropumpen geförderte Förderstrom hauptsächlich nur noch durch die Hydromotoren dieses Antriebsstrangs fließt. Vielmehr wird eine zwangsweise Druckversorgung auch des anderen Antriebsstrangs sichergestellt.

Die Ansprüche 8 bis 14 betreffen vorteilhafte Weiterbildungen des hydrostatischen Fahrantriebs nach Anspruch 7.

Bei der vorteilhaften Weiterbildung nach Anspruch 8 sind nicht nur zwei sondern vier Hydromotoren vorgesehen, die jeweils unterschiedliche Antriebsräder antreiben können. Auch die zusätzlichen Hydromotoren sind als Doppel-Hydromotoren bestehend aus jeweils zwei Teil-Hydromotoren aufgebaut und stützen sich entweder ausgangsseitig oder eingangsseitig an beiden Hydropumpen ab, wobei keiner der vier Hydromotoren an den beiden Hydropumpen in gleicher Weise angeschlossen ist. Dabei können die Hydromotoren entsprechend Anspruch 9 so zusammengeschaltet sein, daß jeweils zwei Hydromotoren paarweise eine Fahrzeugachse antreiben.

Alternativ kann entsprechend Anspruch 10 nur ein einziger weiterer Hydromotor vorgesehen sein, der ein drittes Fahrzeugrad antreibt. Dieser dritte Hydromotor ist nicht notwendigerweise als Doppel-Hydromotor auszubilden. Der Eingang dieses dritten Hydromotors ist vorzugsweise an der ersten Hydropumpe angeschlossen, während sein Ausgang an der zweiten Hydropumpe angeschlossen ist, so daß wiederum eine kreuzweise Verschaltung realisiert ist und die Förderstromaufteilung der beiden Hydropumpen gegenüber dem Antrieb von nur zwei als Doppel-Hydromotoren ausgebildeten Hydromotoren nicht beeinträchtigt wird. Dieser zusätzliche Hydromotor kann entsprechend Anspruch 11 ein weiteres Fahrzeug-Rad antreiben.

Entsprechend Anspruch 12 kann dieser zusätzliche Hydromotor abschaltbar sein, wobei der abgeschaltete Hydromotor vorzugsweise nach Anspruch 13 über eine Einspeiseeinrichtung mit einem Speisedruck versorgt wird.

Entsprechend Anspruch 14 kann es vorteilhaft sein, die Eingänge und die Ausgänge der beiden Hydropumpen durch geeignete Überbrückungsventile miteinander zu verbinden.

Bevorzugte Ausführungsbeispiele der Erfindung werden nachfolgend unter Bezugnahme auf die Zeichnung näher beschrieben. In der Zeichnung zeigen:
- Fig. 1: ein erstes Ausführungsbeispiel des erfindungsgemäßen hydrostatischen Fahrantriebs in einem hydraulischen Prinzipschaltbild;
- Fig. 2: ein zweites Ausführungsbeispiel des erfindungsgemäßen hydrostatischen Fahrantriebs in einem hydraulischen Prinzipschaltbild;
- Fig. 3: ein drittes Ausführungsbeispiel des erfindungsgemäßen hydrostatischen Fahrantriebs in einem hydraulischen Prinzipschaltbild;
- Fig. 4: ein viertes Ausführungsbeispiel des erfindungsgemäßen hydrostatischen Fahrantriebs in einem hydraulischen Prinzipschaltbild;
- Fig. 5: ein fünftes Ausführungsbeispiel des erfindungsgemäßen hydrostatischen Fahrantriebs in einem hydraulischen Prinzipschaltbild;
- Fig. 6: ein sechstes Ausführungsbeispiel des erfindungsgemäßen hydrostatischen Fahrantriebs in einem hydraulischen Prinzipschaltbild; und
- Fig. 7: ein siebtes Ausführungsbeispiel des erfindungsgemäßen hydrostatischen Fahrantriebs in einem hydraulischen Prinzipschaltbild.

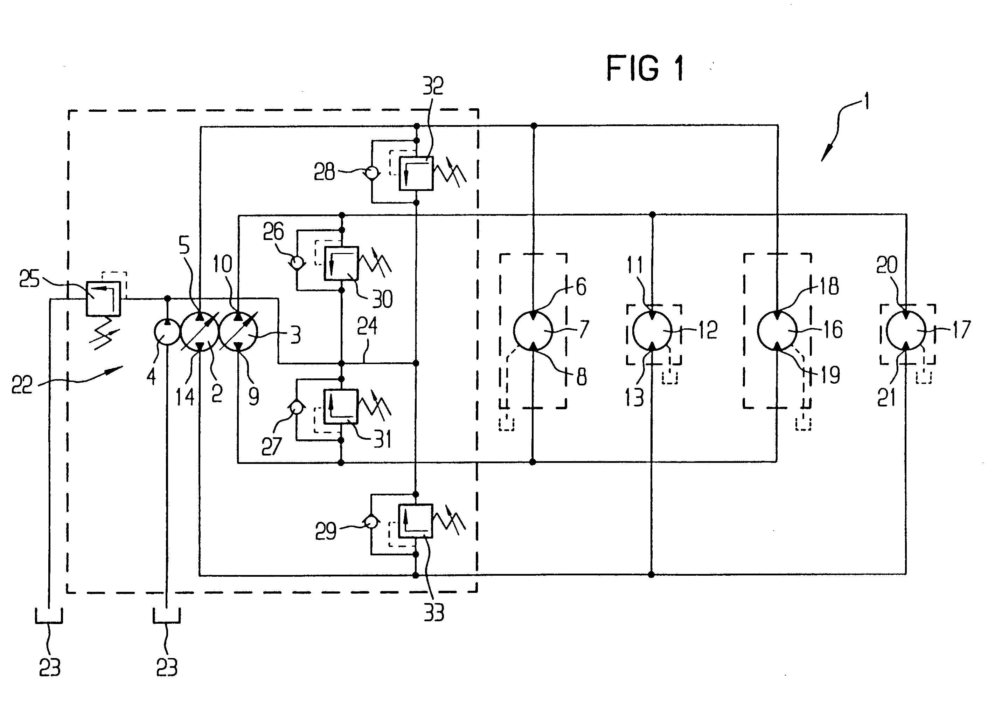

Fig. 1 zeigt ein erstes Ausführungsbeispiel der Erfindung in einem hydraulischen Prinzipschaltbild. Der erfindungsgemäße hydrostatische Fahrantrieb ist allgemein mit dem Bezugszeichen 1 bezeichnet.

Von einem nicht dargestellten Antriebsmotor, beispielsweise einem Verbrennungsmotor, wird eine vorzugsweise als Verstellpumpe ausgebildete erste Hydropumpe 2, eine vorzugsweise ebenfalls als Verstellpumpe ausgebildete zweite Hydropumpe 3 und eine Hilfspumpe 4 angetrieben. Die erste und zweite Hydropumpe 2 und 3 und die Hilfspumpe 4 sind vorzugsweise auf einer gemeinsamen Antriebswelle angeordnet.

Der Ausgangsanschluß 5 der ersten Hydropumpe 2 ist über eine hydraulische Verbindungsleitung mit einem Eingangsanschluß 6 eines ersten Hydromotors 7 verbunden. Ein Ausgangsanschluß 8 des ersten Hydromotors 7 ist über eine hydraulische Verbindungsleitung mit einem Eingangsanschluß 9 der zweiten Hydropumpe 3 verbunden. Der Ausgangsanschluß 10 der zweiten Hydropumpe 3 ist hydraulisch mit einem Eingangsanschluß 11 eines zweiten Hydromotors 12 verbunden. Der Ausgangsanschluß 13 des zweiten Hydromotors 12 steht hingegen hydraulisch mit dem Eingangsanschluß 14 der ersten Hydropumpe 2 in Verbindung. Die Hydropumpen 2 und 3 und die Hydromotoren 7 und 12 sind daher seriell so zueinander angeordnet, daß jeweils einer Hydropumpe in dem hydraulischen Kreislauf ein Hydromotor folgt und umgekehrt einem Hydromotor wiederum eine Hydropumpe folgt. Der von den Hydropumpen 2 und 3 geförderte Förderstrom wird daher zwangsweise durch beide Hydromotoren 7 und 12 geführt, wobei die beiden Hydromotoren 7 und 12 unterschiedliche Antriebsstränge, beispielsweise unterschiedliche Antriebsräder antreiben.

Ein Schlupf eines der beiden Antriebsstränge wird durch die erfindungsgemäße Maßnahme wirkungsvoll verhindert, da der mit dem entsprechenden Antriebsstrang verbundene Hydromotor in den hydraulischen Kreislauf so eingebunden ist, daß sich das Schluckvolumen dieses Hydromotors nicht ohne Erhöhung des Fördervolumens der beiden Hydropumpen 2 und 3 erhöhen kann. Einem Schlupf der angetriebenen Antriebsräder oder gar einem Durchdrehen der Antriebsräder wird daher entgegengewirkt.

Entsprechend der in Fig. 1 dargestellten Weiterbildung sind ein dritter Hydromotor 16 und ein vierter Hydromotor 17 zusätzlich vorgesehen, wobei der dritte Hydromotor 16 und der vierte Hydromotor 17 jeweils ein drittes und ein viertes Antriebsrad antreiben können. Dabei ist der dritte Hydromotor 16 dem ersten Hydromotor 7 und der vierte Hydromotor 17 dem zweiten Hydromotor 12 so parallel geschaltet, daß ein Eingangsanschluß 18 des dritten Hydromotors 16 mit dem Ausgangsanschluß 5 der ersten Hydropumpe 2, ein Ausgangsanschluß 19 des dritten Hydromotors 16 mit dem Eingangsanschluß 9 der zweiten Hydropumpe 3, ein Eingangsanschluß 20 des vierten Hydromotors 17 mit dem Ausgangsanschluß 10 der zweiten Hydropumpe 3 und ein Ausgangsanschluß 21 der vierten Hydropumpe 17 mit dem Eingangsanschluß 14 der ersten Hydropumpe 2 verbunden sind.

Vorteilhafterweise sind die Antriebsräder des ersten Hydromotors 7 und des dritten Hydromotors 16 einerseits und die Antriebsräder des zweiten Hydromotors 12 und des vierten Hydromotors 17 paarweise jeweils einer Fahrzeug-Achse zugeordnet.

Aus Fig. 1 ist ferner eine allgemein mit dem Bezugszeichen 22 bezeichnete Einspeiseeinrichtung vorgesehen. Die Hilfspumpe 4 der Einspeiseeinrichtung saugt Druckfluid aus einem Druckfluid-Tank 23 nach und speist dieses in eine Einspeiseleitung 24 ein. Über ein mit dem Druckfluid-Tank 23 verbundenes Druckbegrenzungsventil 25 wird der Druck in der Einspeiseleitung 24 auf ein konstantes Niveau eingeriegelt. Über Rückschlagventile 26 bis 29 wird das nachzuspeisende Druckfluid in diejenigen Abschnitte des geschlossenen hydraulischen Kreislaufs eingespeist, die jeweils den Niederdruck führen. Dabei ist zu beachten, daß bei einer Umkehrung der Drehrichtung der Hydromotoren 7, 12, 16 und 17 und somit einer Umkehrung der Förderrichtung der beiden Hydropumpen 2 und 3 sich die Hochdruck und Niederdruck führenden Leitungsabschnitte des hydraulischen Kreislaufs umkehren. Selbstverständlich sind entsprechend der vorstehenden Beschreibung dann die Eingangsanschlüsse der Hydropumpen und Hydromotoren gegen Ausgangsanschlüsse und die Ausgangsanschlüsse der Hydropumpen und Hydromotoren gegen Eingangsanschlüsse zu ersetzen.

Druckbegrenzungsventile 30 bis 33 stellen sicher, daß der Druck in den jeweils Hochdruck führenden Leitungsabschnitten des geschlossenen hydraulischen Kreislaufs einen vorgegebenen Maximalwert nicht überschreitet. Wird dieser Maximalwert erreicht, so öffnet das mit diesem Leitungsabschnitt verbundene Druckbegrenzungsventil und bläst Druckfluid über das Druckbegrenzungsventil 25 zu dem Druckfluid-Tank 23 ab.

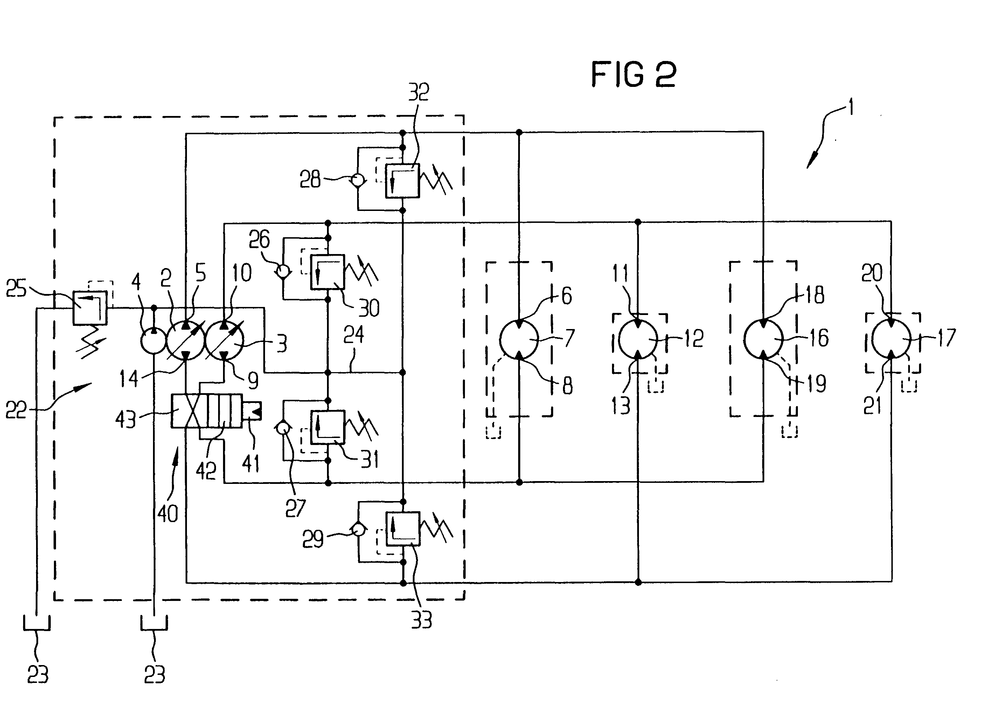

Fig. 2 zeigt ein zweites Ausführungsbeispiel des erfindungsgemäßen hydrostatischen Fahrantriebs. Bereits beschriebene Elemente sind in Fig. 2 und in den folgenden Zeichnungen mit übereinstimmenden Bezugszeichen versehen, so daß sich insoweit eine wiederholende Beschreibung erübrigt.

Im Unterschied zu dem in Fig. 1 dargestellten Ausführungsbeispiel ist bei dem Ausführungsbeispiel der Fig. 2 ein zusätzliches Wechselventil 40 vorgesehen, das im Ausführungsbeispiel als 4/2-Wegeventil ausgebildet ist. Das Wechselventil 40 verbindet im Ausführungsbeispiel die Ausgänge 8 und 19 des ersten Hydromotors 7 und des dritten Hydromotors 16 einerseits und die Ausgänge 13 und 21 des zweiten Hydromotors 12 und des vierten Hydromotors 17 andererseits mit den Eingängen 9 und 14 der Hydropumpen 2 und 3. Das Wechselventil 40 ist über einen elektromagnetischen Geber 41 betätigbar und hat eine erste Schaltstellung 42 zur parallelen Verbindung seiner Eingänge und Ausgänge und eine zweite Schaltstellung 43 zur gekreuzten, wechselseitigen Verbindung seiner Eingänge und Ausgänge.

Wenn sich das Wechselventil 40 in seiner ersten Schaltstellung 42 befindet, arbeitet der hydrostatische Fahrantrieb in dem Geradeaus-Fahrbetrieb so, wie dies bereits anhand von Fig. 1 beschrieben wurde. Wird jedoch das Wechselventil 40 in seine zweite Schaltstellung 43 verstellt, so wie dies in Fig. 2 dargestellt ist, so arbeitet der hydrostatische Fahrantrieb in einem Kurven-Fahrbetrieb. In diesem Kurven-Fahrbetrieb sind zwei hydraulische Kreisläufe gebildet, wobei der erste Hydromotor 7 und der dazu parallel geschaltete dritte Hydromotor 16 sowohl eingangsseitig als auch ausgangsseitig ausschließlich mit der ersten Hydropumpe 2 verbunden sind. Entsprechend sind der zweite Hydromotor 12 und der dazu parallel geschaltete vierte Hydromotor 17 sowohl eingangsseitig als auch ausgangsseitig ausschließlich mit der zweiten Hydropumpe 3 verbunden. Durch unterschiedliches Ausschwenken der beiden Hydropumpen 2 und 3 läßt sich ein unterschiedlicher Förderstrom in den beiden voneinander getrennten hydraulischen Kreisläufen erreichen, so daß die unterschiedlichen Antriebsstränge, die beispielsweise die linken Räder und die rechten Räder antreiben, unterschiedlich beaufschlagt werden, so daß das Fahrzeug eine Kurvenfahrt ausführen kann. Beim Übergang zu dem Geradeaus-Fahrbetrieb wird das Wechselventil 40 dann wieder in die erste Schaltstellung 42 zurückgeschaltet.

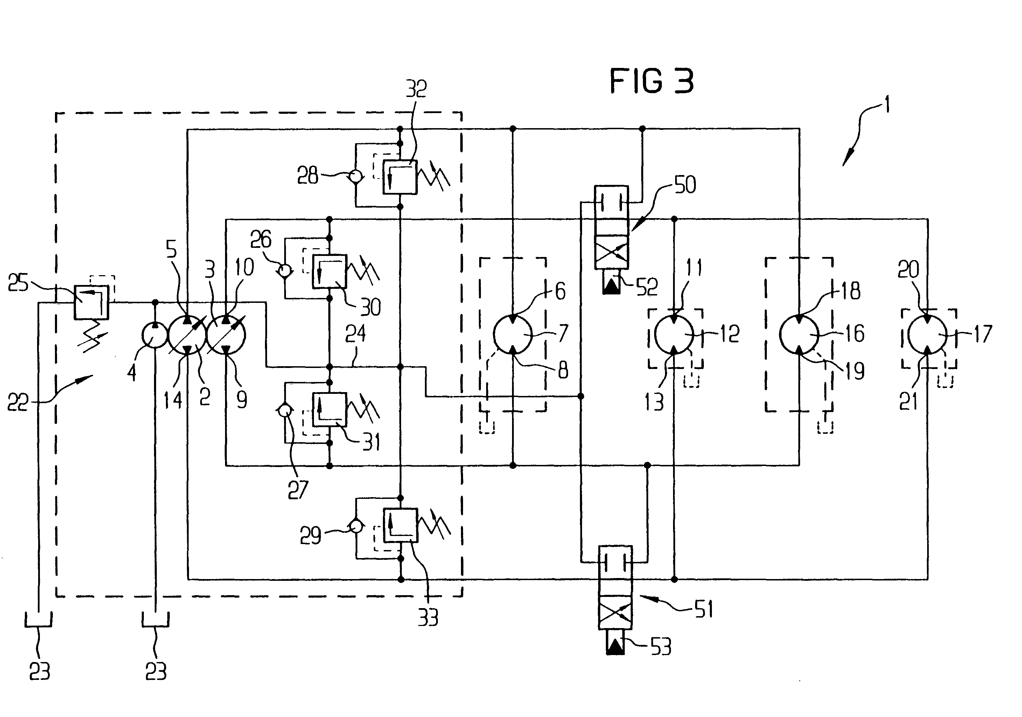

Fig. 3 zeigt ein drittes Ausführungsbeispiel des erfindungsgemäßen hydrostatischen Fahrantriebs 1.

Zusätzlich zu dem in Fig. 1 dargestellten Ausführungsbeispiel sind bei dem Ausführungsbeispiel der Fig. 3 zwei Schaltventile 50 und 51 vorgesehen, die im dargestellten Ausführungsbeispiel als 4/2-Wegeventile ausgebildet sind und mittels elektromagnetischer Geber 52 und 53 betätigbar sind.

Bei der in Fig. 3 dargestellten Grundstellung sind der zweite Hydromotor 12 und der vierte Hydromotor 17 mit dem hydraulischen Kreislauf so wie anhand von Fig. 1 beschrieben verbunden. Wenn jedoch die Schaltventile 50 und 51 in ihre jeweils andere Schaltstellung umgeschaltet werden, so sind die Hydromotoren 12 und 17 von dem hydraulischen Kreislauf getrennt und mit der Einspeiseleitung 24 der Einspeiseeinrichtung 22 verbunden. Die mit den Hydromotoren 12 und 17 verbundene Fahrzeugachse wird dann nicht mehr angetrieben, so daß die Hydromotoren 12 und 17 lastfrei mitlaufen. Die Verbindung mit der Einspeiseleitung 24 bewirkt, daß die Hydromotoren 12 und 17 dabei ausreichend geschmiert und gekühlt werden.

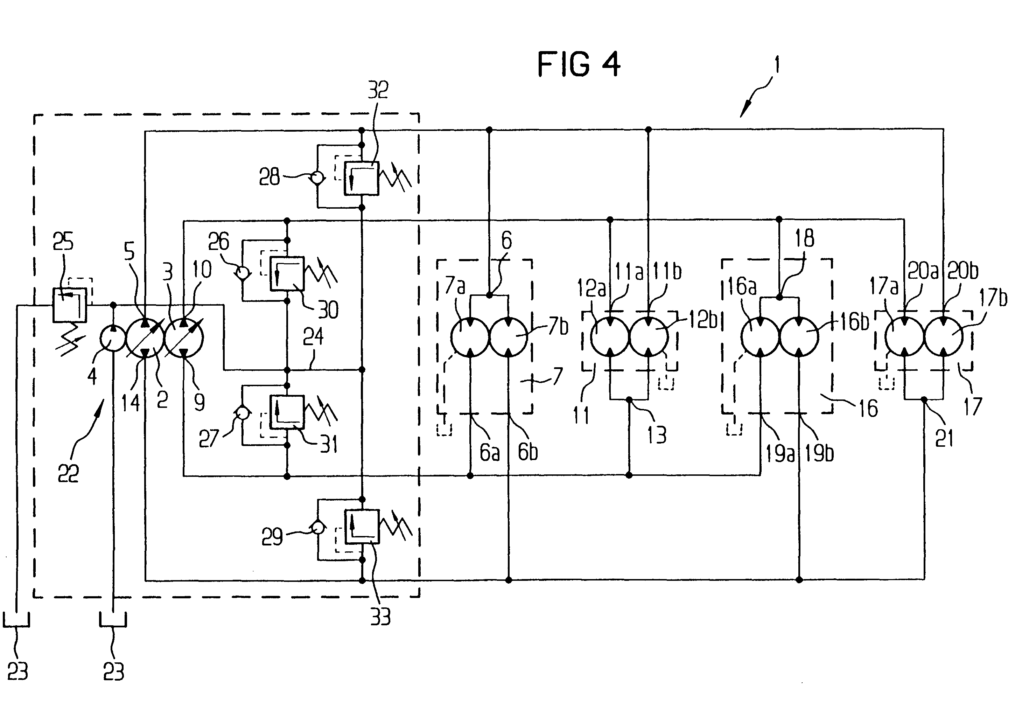

Fig. 4 zeigt ein viertes Ausführungsbeispiel des erfindungsgemäßen hydrostatischen Fahrantriebs, das sich von den bisher beschriebenen Ausführungsbeispielen grundlegend unterscheidet.

Im Gegensatz zu den Ausführungsbeispielen der Fig. 1 bis 3 sind die Hydromotoren 7, 12, 16 und 17 bei dem Ausführungsbeispiel der Fig. 4 nicht als Einzel-Hydromotoren sondern als Doppel-Hydromotoren ausgebildet. Die Hydromotoren 7 bzw. 12 bzw. 16 bzw. 17 bestehen jeweils aus einem ersten Teil-Hydromotor 7a bzw. 12a bzw. 16a bzw. 17a und einem zweiten Teil-Hydromotor 7b bzw. 12b bzw. 16b bzw. 17b.

Die einzelnen Teil-Hydromotoren sind mit den beiden Hydropumpen 2 und 3 so zu einem geschlossenen hydraulischen Kreislauf verbunden, daß der gemeinsame Eingangsanschluß 6 der beiden Teil-Hydropumpen 7a und 7b des ersten Hydromotors 7 mit dem Ausgangsanschluß 5 der ersten Hydropumpe 2 verbunden ist. Ferner ist ein Ausgangsanschluß 6a des ersten Teil-Hydromotors 7a des ersten Hydromotors 7 mit dem Eingangsanschluß 9 der zweiten Hydropumpe 3 und ein Ausgangsanschluß 6b des zweiten Teil-Hydromotors 7b des ersten Hydromotors 7 mit einem Eingangsanschluß 14 der ersten Hydropumpe 2 verbunden. Desweiteren ist ein Eingangsanschluß 11a des ersten Teil-Hydromotors 12a des zweiten Hydromotors 12 mit einem Ausgangsanschluß 10 der zweiten Hydropumpe 3 und ein Eingangsanschluß 11b des zweiten Teil-Hydromotors 12b des zweiten Hydromotors 12 mit dem Ausgangsanschluß 5 der ersten Hydropumpe 2 verbunden. Ein gemeinsamer Ausgangsanschluß 13 der beiden Teil-Hydromotoren 12a und 12b des zweiten Hydromotors 12 ist mit dem Eingangsanschluß 9 der zweiten Hydropumpe 3 verbunden.

Ein gemeinsamer Eingangsanschluß 18 der beiden Teil-Hydromotoren 16a und 16b des dritten Hydromotors 16 ist mit dem Ausgangsanschluß 10 der zweiten Hydropumpe 3 verbunden. Ein Ausgangsanschluß 19a des ersten Teil-Hydromotors 16a des dritten Hydromotors 16 ist mit dem Eingangsanschluß 9 der zweiten Hydropumpe 3 verbunden, während ein Ausgangsanschluß 19b des zweiten Teil-Hydromotors 16b des dritten Hydromotors 16 mit dem Eingangsanschluß 14 der ersten Hydropumpe 2 verbunden ist. Dagegen ist ein Eingangsanschluß 20a des ersten Teil-Hydromotors 17a des vierten Hydromotors 17 mit dem Ausgangsanschluß 10 der zweiten Hydropumpe 3 verbunden, während ein Eingangsanschluß 20b des zweiten Teil-Hydromotors 17b des vierten Hydromotors 17 mit dem Ausgangsanschluß 5 der ersten Hydropumpe 2 verbunden ist. Schließlich ist ein gemeinsamer Ausgangsanschluß 21 der beiden Teil-Hydromotoren 17a und 17b des vierten Hydromotors 17 mit dem Eingangsanschluß 14 der ersten Hydropumpe 2 verbunden.

Bei dieser besonderen Konfiguration der Hydropumpen und Hydromotoren ist sichergestellt, daß sämtliche Hydromotoren 7, 12, 16 und 17 entweder eingangsseitig oder ausgangsseitig mit beiden Hydropumpen 2 und 3 verbunden sind und kein Hydromotor 7, 12, 16 und 17 an den beiden Hydropumpen 2 und 3 in gleicher Weise angeschlossen ist. Bei einem auftretenden Schlupf in dem Antriebsstrang, welchem die Hydromotoren 7, 12, 16 und 17 zugeordnet sind, ist es daher nicht möglich, daß der diesem Antriebsstrang zugeordnete Hydromotor einen der anderen Hydromotoren hydraulisch überbrückt und Schluckvolumen entzieht. Ein Schlupf bzw. ein Durchdrehen eines mit den vier unterschiedlichen Antriebssträngen verbundenen Antriebsrads ist daher bei der erfindungsgemäßen Konfiguration nicht möglich.

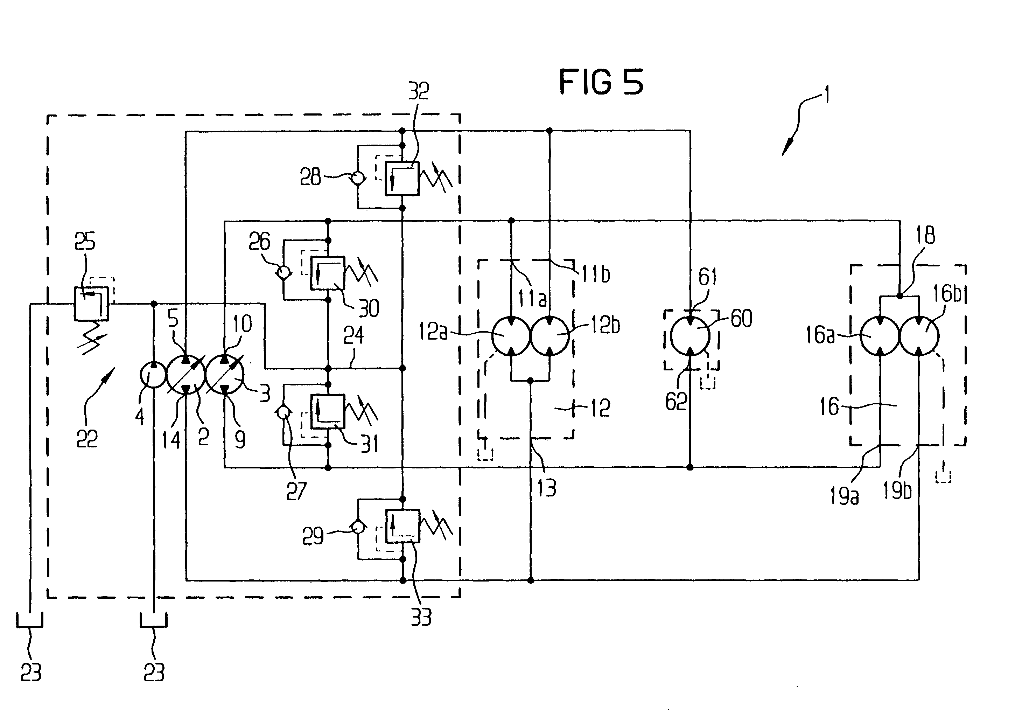

In Fig. 5 ist ein gegenüber Fig. 4 variiertes fünftes Ausführungsbeispiel des erfindungsgemäßen hydrostatischen Fahrantriebs 1 dargestellt. Der erste Hydromotor 7 und der vierte Hydromotor 17 fehlen bei dieser Ausgestaltung. Stattdessen ist ein weiterer Hydromotor 60 vorgesehen, der als Einzel-Hydromotor ausgebildet ist. Ein Eingangsanschluß 61 des weiteren Hydromotors 60 ist mit dem Ausgangsanschluß 5 der ersten Hydropumpe 2 verbunden, während ein Ausgangsanschluß 62 des weiteren Hydromotors 60 mit einem Eingangsanschluß 9 der zweiten Hydropumpe 3 verbunden ist. Diese Ausgestaltung dient zum Antrieb von drei Fahrzeugrädern, wobei zwei zu einer Fahrzeugachse zusammengefaßte Fahrzeugräder durch die Hydromotoren 12 und 16 und ein drittes Antriebsrad oder Antriebsrad durch den Hydromotor 60 angetrieben werden. Anstatt den ersten Hydromotor 7 und den vierten Hydromotor 17 zu ersetzen, könnte der weitere Hydromotor 60 auch den dritten Hydromotor 16 und den vierten Hydromotor 17 oder den ersten Hydromotor 7 und den zweiten Hydromotor 12 sowie den zweiten Hydromotor 12 und den dritten Hydromotor 16 ersetzen. Wesentlich ist, daß der weitere Hydromotor 60 das Strömungsgleichgewicht in dem hydraulischen Kreislauf nicht stört und das Aufteilungsverhältnis der Förderströme der einzelnen Hydropumpen 2 und 3 jeweils gleich ist.

Auch bei der in Fig. 5 dargestellten Schaltungskonfiguration ist sichergestellt, daß ein Schlupf an den drei Antriebsrädern nicht auftreten kann.

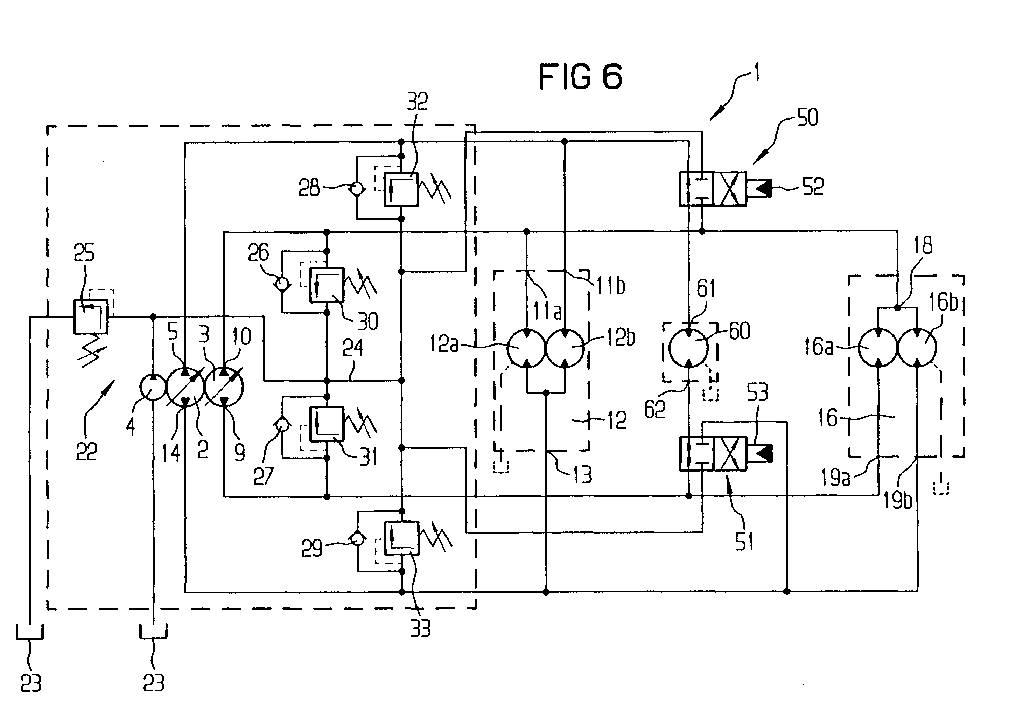

Fig. 6 zeigt ein sechstes Ausführungsbeispiel des erfindungsgemäßen hydrostatischen Fahrantriebs 1. Dieses Ausführungsbeispiel ist von dem anhand von Fig. 5 bereits beschriebenen Ausführungsbeispiel dadurch variiert, daß zusätzliche Schaltventile 50 und 51 vorgesehen sind, die mittels elektromagnetischer Geber 52 und 53 betätigbar sind. Die Schaltventile 50 und 51 dienen zum bedarfsweisen Abschalten des Hydromotors 60. Wenn der Hydromotor 60 abgeschaltet ist, so sind sowohl dessen Eingang 61 als auch dessen Ausgang 62 über die Schaltventile 50 und 51 mit der Einspeiseeinrichtung 22 verbunden, so daß der Hydromotor 60 ausreichend geschmiert und gekühlt wird.

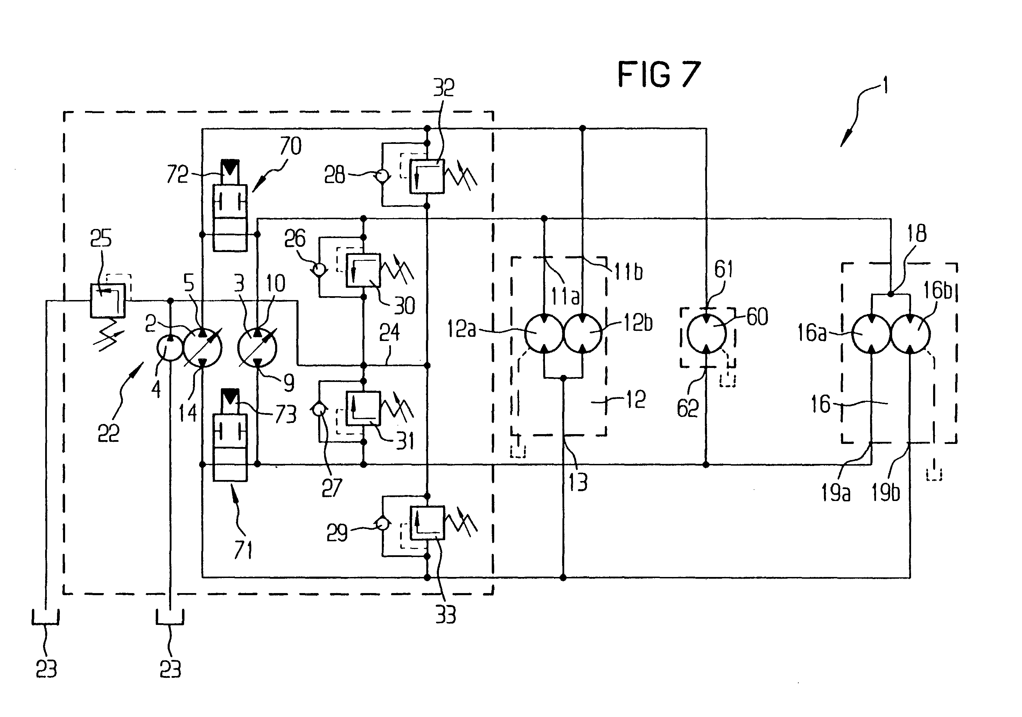

Fig. 7 zeigt ein siebtes Ausführungsbeispiel des erfindungsgemäßen hydrostatischen Fahrantriebs 1. Im Unterschied zu dem bereits anhand von Fig. 5 beschriebenen fünften Ausführungsbeispiel sind bei dem Ausführungsbeispiel der Fig. 7 zusätzliche Überbrückungsventile 70 und 71 vorgesehen, die ebenfalls elektromagnetisch durch elektromagnetische Geber 72 und 73 betätigbar sind. Die Überbrückungsventile 70 und 71 ermöglichen es, die Ausgänge 5 und 10 der beiden Hydropumpen 2 und 3 einerseits und die Eingänge 9 und 14 der beiden Hydropumpen 2 und 3 andererseits bedarfsweise miteinander zu verbinden. Die dabei entstehende Parallelanordnung sämtlicher Hydropumpen und Hydromotoren bietet für einzelne Anwendungsfälle Vorteile.

## Patentansprüche

1. Hydrostatischer Fahrantrieb (1) mit zumindest einer ersten und einer zweiten Hydropumpe (2, 3) und zumindest einem ersten und einem zweiten Hydromotor (7, 12), wobei die Hydromotoren (7, 12) jeweils getrennte Antriebsstränge antreiben,
**dadurch gekennzeichnet,**
**daß** in einem Geradeaus-Fahrbetrieb die Hydropumpen (2, 3) und die Hydromotoren (7, 12) in einem einzigen geschlossenen hydraulischen Kreislauf ohne Querverbindungen so miteinander gekoppelt sind, daß
ein Eingangsanschluß (6) des ersten Hydromotors (7) mit einem Ausgangsanschluß (5) der ersten Hydropumpe (2),
ein Eingangsanschluß (9) der zweiten Hydropumpe (3) mit einem Ausgangsanschluß (8) des ersten Hydromotors (7),
ein Eingangsanschluß (11) des zweiten Hydromotors (12) mit einem Ausgangsanschluß (10) der zweiten Hydropumpe (3) und
ein Eingangsanschluß (14) der ersten Hydropumpe (2) mit einem Ausgangsanschluß (13) des zweiten Hydromotors (12) verbunden ist.

2. Hydrostatischer Fahrantrieb nach Anspruch 1,
**dadurch gekennzeichnet,**
**daß** ein Wechselventil (40) vorgesehen ist, das einen Wechsel von dem Geradeaus-Fahrbetrieb zu einem Kurven-Fahrbetrieb ermöglicht,
wobei in dem Kurven-Fahrbetrieb in einem ersten geschlossenen hydraulischen Kreislauf der erste Hydromotor (7) und die erste Hydropumpe (2) und in einem davon getrennten zweiten geschlossenen hydraulischen Kreislauf der zweite Hydromotor (12) und die zweite Hydropumpe (3) miteinander verbunden sind.

3. Hydrostatischer Fahrantrieb nach Anspruch 2,
**dadurch gekennzeichnet,**
**daß** das Wechselventil (40) ein 4/2-Wegeventil mit einer ersten Schaltstellung (42) zur parallelen Verbindung seiner Eingänge und Ausgänge und einer zweiten Schaltstellung (43) zur gekreuzten Verbindung seiner Eingänge und Ausgänge ist.

4. Hydrostatischer Fahrantrieb nach einem der Ansprüche 1 bis 3,
**dadurch gekennzeichnet,**
**daß** zu dem ersten Hydromotor (7) ein dritter Hydromotor (16) und zu dem zweiten Hydromotor (12) ein vierter Hydromotor (17) parallel geschaltet ist, wobei der erste (7) und der dritte Hydromotor (16) einer ersten Fahrzeug-Achse und der zweite (12) und der vierte (17) Hydromotor einer zweiten Fahrzeug-Achse zugeordnet sind.

5. Hydrostatischer Fahrantrieb nach Anspruch 4,
**dadurch gekennzeichnet,**
**daß** entweder der erste (7) und der dritte (16) Hydromotor oder der zweite (12) und der vierte (17) Hydromotor mittels Schaltventilen (50, 51) abschaltbar sind.

6. Hydrostatischer Fahrantrieb nach Anspruch 5,
**dadurch gekennzeichnet,**
**daß** die Schaltventile (50, 51) so ausgebildet sind, daß die abgeschalteten Hydromotoren (12, 17) über eine Einspeiseeinrichtung (22) mit einem Speisedruck versorgt werden.

7. Hydrostatischer Fahrantrieb mit zumindest einer ersten und einer zweiten Hydropumpe (2, 3) und zumindest einem ersten und einem zweiten Hydromotor (7, 12), wobei die Hydromotoren (7, 12) jeweils getrennte Antriebsstränge antreiben, wobei die Hydromotoren (7, 12) Doppel-Hydromotoren mit jeweils zwei Teil-Hydromotoren (7a, 7b; 12a, 12b) sind und die Hydropumpen (2, 3) und die Hydromotoren (7, 12) in einem geschlossenen hydraulischen Kreislauf miteinander gekoppelt sind,
**dadurch gekennzeichnet,**
**daß** ein gemeinsamer Eingangsanschluß (6) der beiden Teil-Hydromotoren (7a, 7b) des ersten Hydromotors (7) mit einem Ausgangsanschluß (5) der ersten Hydropumpe (2) verbunden ist,
ein Ausgangsanschluß (6a) des ersten Teil-Hydromotors (7a) des ersten Hydromotors (7) mit einem Eingangsanschluß (9) der zweiten Hydropumpe (3) verbunden ist,
ein Ausgangsanschluß (6b) des zweiten Teil-Hydromotors (7b) des ersten Hydromotors (7) mit einem Eingangsanschluß (14) der ersten Hydropumpe (2) verbunden ist,
ein Eingangsanschluß (11a) des ersten Teil-Hydromotors (12a) des zweiten Hydromotors (12) mit einem Ausgangsanschluß (10) der zweiten Hydropumpe (3) verbunden ist,
einem Eingangsanschluß (11b) des zweiten Teil-Hydromotors (12b) des zweiten Hydromotors (12) mit dem Ausgangsanschluß (5) der ersten Hydropumpe (2) verbunden ist, und
ein gemeinsamer Ausgangsanschluß (13) der beiden Teil-Hydromotoren (12a, 12b) des zweiten Hydromotors (12) mit dem Eingangsanschluß (9) der zweiten Hydropumpe (3) verbunden ist.

8. Hydrostatischer Fahrantrieb nach Anspruch 7,
**dadurch gekennzeichnet,**
**daß** zusätzlich ein aus zwei Teil-Hydromotoren (16a, 16b) bestehender dritter Hydromotor (16) und ein ebenfalls aus zwei Teil-Hydromotoren (17a, 17b) bestehender vierter Hydromotor (17) vorgesehen sind und
**daß** die Hydropumpen (2, 3) und der dritte und vierte Hydromotor (16, 17) in dem geschlossenen hydraulischen Kreislauf so miteinander gekoppelt sind, daß
ein gemeinsamer Eingangsanschluß (18) der beiden Teil-Hydromotoren (16a, 16b) des dritten Hydromotors (16) mit dem Ausgangsanschluß (10) der zweiten Hydropumpe (3) verbunden ist,
ein Ausgangsanschluß (19a) des ersten Teil-Hydromotors (16a) des dritten Hydromotors (16) mit dem Eingangsanschluß (9) der zweiten Hydropumpe (3) verbunden ist,
ein Ausgangsanschluß (19b) des zweiten Teil-Hydromotors (16b) des dritten Hydromotors (16) mit dem Eingangsanschluß (14) der ersten Hydropumpe (2) verbunden ist,
ein Eingangsanschluß (20a) des ersten Teil-Hydromotors (17a) des vierten Hydromotors (17) mit dem Ausgangsanschluß (10) der zweiten Hydropumpe (3) verbunden ist,
einem Eingangsanschluß (20b) des zweiten Teil-Hydromotors (17b) des vierten Hydromotors (17) mit dem Ausgangsanschluß (5) der ersten Hydropumpe (2) verbunden ist, und
ein gemeinsamer Ausgangsanschluß (21) der beiden Teil-Hydromotoren (17a, 17b) des vierten Hydromotors (17) mit dem Eingangsanschluß (14) der ersten Hydropumpe (2) verbunden ist.

9. Hydrostatischer Fahrantrieb nach Anspruch 8,
**dadurch gekennzeichnet,**
**daß** jeweils zwei Hydromotoren (7, 17; 12, 16) eine gemeinsame Fahrzeug-Achse antreiben.

10. Hydrostatischer Fahrantrieb nach Anspruch 7,
**dadurch gekennzeichnet,**
**daß** ein dritter Hydromotor (60) vorsehen ist, dessen Eingangsanschluß (61) mit dem Ausgangsanschluß (5) der ersten Hydropumpe (12) und dessen Ausgangsanschluß (62) mit dem Eingangsanschluß (9) der zweiten Hydropumpe (3) verbunden ist.

11. Hydrostatischer Fahrantrieb nach Anspruch 10,
**dadurch gekennzeichnet,**
**daß** der erste und der zweite Hydromotor eine gemeinsame Fahrzeug-Achse antreiben und der dritte Hydromotor (60) ein weiteres Fahrzeug-Rad oder Fahrzeug-Achse antreibt.

12. Hydrostatischer Fahrantrieb nach Anspruch 10 oder 11,
**dadurch gekennzeichnet,**
**daß** der dritte Hydromotor (60) mittels Schaltventilen (50, 51) abschaltbar ist.

13. Hydrostatischer Fahrantrieb nach Anspruch 12,
**dadurch gekennzeichnet,**
**daß** die Schaltventile (50, 51) so ausgebildet sind, daß der abgeschaltete Hydromotor (60) über eine Einspeiseeinrichtung (22) mit einem Speisedruck versorgt wird.

14. Hydrostatischer Fahrantrieb nach einem der Ansprüche 7 bis 13,
**dadurch gekennzeichnet,**
**daß** zwischen den Eingangsanschlüssen (5, 10) und den Ausgangsanschlüssen (14, 9) der Hydropumpen (2, 3) Überbrückungsventile (70, 71) vorgesehen sind, um die Eingangsanschlüsse (5, 10) und die Ausgangsanschlüsse (14, 9) der Hydropumpen (2, 3) bei Bedarf miteinander zu verbinden.

## Claims

1. A hydrostatic vehicle drive (1) with at least one first and one second hydraulic pump (2, 3) and at least one first and one second hydraulic motor (7, 12), whereby the hydraulic motors (7, 12) each drive separate drivelines,
**characterised in that**
in a straight-ahead running mode the hydraulic pumps (2, 3) and the hydraulic motors (7, 12) are coupled to one another in a single closed hydraulic circuit without cross-connections in such a way that
an input port (6) of the first hydraulic motor (7) is connected to an output port (5) of the first hydraulic pump (2),
an input port (9) of the second hydraulic pump (3) is connected to an output port (8) of the first hydraulic motor (7),
an input port (11) of the second hydraulic motor (12) is connected to an output port (10) of the second hydraulic pump (3) and
an input port (14) of the first hydraulic pump (2) is connected to an output port (13) of the second hydraulic motor (12).

2. Hydrostatic vehicle drive according to Claim 1,
**characterised in that**
a shuttle valve (40) is provided which enables a change from the straight-ahead running mode to a cornering running mode,
whereby in the cornering running mode the first hydraulic motor (7) and the first hydraulic pump (2) are connected to one another in a first closed hydraulic circuit and the second hydraulic motor (12) and the second hydraulic
pump (3) are connected to one another in a second closed hydraulic circuit which is separate from the first closed hydraulic circuit.

3. Hydrostatic vehicle drive according to Claim 2,
**characterised in that**
the shuttle valve (40) is a 4/2-way valve with a first switching position (42) for parallel connection of its inputs and outputs and with a second switching position (43) for crossed connection of its inputs and outputs.

4. Hydrostatic vehicle drive according to one of Claims 1 to 3,
**characterised in that**
a third hydraulic motor (16) is connected parallel to the first hydraulic motor (7), and a fourth hydraulic motor (17) is connected parallel to the second hydraulic motor (12), the first hydraulic motor (7) and the third hydraulic motor (16) being assigned to a first axle of the vehicle and the second hydraulic motor (12) and the fourth hydraulic motor (17) being assigned to a second axle of the vehicle.

5. Hydrostatic vehicle drive according to Claim 4,
**characterised in that**
either the first (7) and the third (16) hydraulic motors or the second (12) and the fourth (17) hydraulic motors are capable of being disconnected by means of pilot valves (50, 51).

6. Hydrostatic vehicle drive according to Claim 5,
**characterised in that**
the pilot valves (50, 51) are so designed that the disconnected hydraulic motors (12, 17) are provided with a feed pressure via a feeding device (22).

7. A hydrostatic vehicle drive with at least one first and one second hydraulic pump (2, 3) and at least one first and one second hydraulic motor (7, 12), whereby the hydraulic motors (7, 12) each drive separate drivelines, whereby the hydraulic motors (7, 12) are twin hydraulic motors with, in each case, two component hydraulic motors (7a, 7b; 12a, 12b) and the hydraulic pumps (2, 3) and the hydraulic motors (7, 12) are coupled to one another in a closed hydraulic circuit,
**characterised in that**
a common input port (6) of the two component hydraulic motors (7a, 7b) of the first hydraulic motor (7) is connected to an output port (5) of the first hydraulic pump (2),
an output port (6a) of the first component hydraulic motor (7a) of the first hydraulic motor (7) is connected to an input port (9) of the second hydraulic pump (3),
an output port (6b) of the second component hydraulic motor (7b) of the first hydraulic motor (7) is connected to an input port (14) of the first hydraulic pump (2),
an input port (11a) of the first component hydraulic motor (12a) of the second hydraulic motor (12) is connected to an output port (10) of the second hydraulic pump (3),
to an input port (11b) of the second component hydraulic motor (12b) of the second hydraulic motor (12) is connected to the output port (5) of the first hydraulic pump (2), and
a common output port (13) of the two component hydraulic motors (12a, 12b) of the second hydraulic motor (12) is connected to the input port (9) of the second hydraulic pump (3).

8. Hydrostatic vehicle drive according to Claim 7,
**characterised in that**
in addition a third hydraulic motor (16) consisting of two component hydraulic motors (16a, 16b) and a fourth hydraulic motor (17) consisting likewise of two component hydraulic motors (17a, 17b) are provided and
the hydraulic pumps (2, 3) and the third and fourth hydraulic motors (16, 17) are coupled to one another in the closed hydraulic circuit in such a way that
a common input port (18) of the two component hydraulic motors (16a, 16b) of the third hydraulic motor (16) is connected to the output port (10) of the second hydraulic pump (3),
an output port (19a) of the first component hydraulic motor (16a) of the third hydraulic motor (16) is connected to the input port (9) of the second hydraulic pump (3),
an output port (19b) of the second component hydraulic motor (16b) of the third hydraulic motor (16) is connected to the input port (14) of the first hydraulic pump (2),
an input port (20a) of the first component hydraulic
motor (17a) of the fourth hydraulic motor (17) is connected to the output port (10) of the second hydraulic pump (3), an input port (20b) of the second component hydraulic motor (17b) of the fourth hydraulic motor (17) is connected to the output port (5) of the first hydraulic pump (2), and
a common output port (21) of the two component hydraulic motors (17a, 17b) of the fourth hydraulic motor (17) is connected to the input port (14) of the first hydraulic pump (2).

9. Hydrostatic vehicle drive according to Claim 8,
**characterised in that**
in each case two hydraulic motors (7, 17; 12, 16) drive a common axle of the vehicle.

10. Hydrostatic vehicle drive according to Claim 7,
**characterised in that**
a third hydraulic motor (60) is provided, the input port (61) of which is connected to the output port (5) of the first hydraulic pump (2) and the output port (62) of which is connected to the input port (9) of the second hydraulic pump (3).

11. Hydrostatic vehicle drive according to Claim 10,
**characterised in that**
the first and the second hydraulic motors drive a common axle of the vehicle and the third hydraulic motor (60) drives a further wheel of the vehicle or axle of the vehicle.

12. Hydrostatic vehicle drive according to Claim 10 or 11,
**characterised in that**
the third hydraulic motor (60) is capable of being disconnected by means of pilot valves (50, 51).

13. Hydrostatic vehicle drive according to Claim 12,
**characterised in that**
the pilot valves (50, 51) are so designed that the disconnected hydraulic motor (60) is provided with a feed pressure via a feeding device (22).

14. Hydrostatic vehicle drive according to one of Claims 7 to 13,
**characterised in that**
bridging valves (70, 71) are provided between the input ports (5, 10) and the output ports (14, 9) of the hydraulic pumps (2, 3) in order to connect the input ports (5, 10) and the output ports (14, 9) of the hydraulic pumps (2, 3) to one another when required.

## Revendications

1. Dispositif d'entraînement hydrostatique (1) comportant au moins une première pompe hydraulique et une seconde pompe hydraulique (2, 3) et au moins un premier moteur hydraulique et un second moteur hydraulique (7, 12), les moteurs hydrauliques (7, 12) entraînant des chaînes motrices respectivement séparées, **caractérisé en ce que** dans un mode de déplacement en ligne droite, les pompes hydrauliques (2, 3) et les moteurs hydrauliques (7, 12) sont couplés entre eux dans un seul circuit hydraulique fermé sans liaisons transversales, de telle sorte qu'un raccord d'entrée (6) du premier moteur hydraulique (7) est raccordé à un raccord de sortie (5) de la première pompe hydraulique (2), qu'un raccord d'entrée (9) de la seconde pompe hydraulique (3) est raccordé à un raccord de sortie (8) du premier moteur hydraulique (7), qu'un raccord d'entrée (11) du second moteur hydraulique (12) est raccordé à un raccord de sortie (10) de la seconde pompe hydraulique (3) et qu'un raccord d'entrée (14) de la première pompe hydraulique (2) est relié à un raccord de sortie (13) de la seconde pompe hydraulique (3).

2. Dispositif d'entraînement hydrostatique selon la revendication 1, **caractérisé en ce qu'**il est prévu une soupape de sélection (40), qui est permet une alternance du fonctionnement de déplacement en ligne droite au fonctionnement de déplacement en courbe, auquel cas, lors du fonctionnement de déplacement en courbe, le premier moteur hydraulique (7) et la première pompe hydraulique (2) sont reliés entre eux dans un premier circuit hydraulique fermé, et le second moteur hydraulique (12) et la deuxième pompe hydraulique (3) sont reliés entre eux dans un circuit hydraulique fermé séparé du précédent.

3. Dispositif d'entraînement hydrostatique selon la revendication 2, **caractérisé en ce que** la soupape de sélection (40) est une soupape à 4/2 voies comportant une première position de commutation (42) pour relier en parallèle ses entrées et ses sorties, et une seconde position de commutation (43) pour relier d'une manière croisée ses entrées et ses sorties.

4. Dispositif d'entraînement hydrostatique selon l'une des revendications 1 à 3, **caractérisé en ce qu'**un troisième moteur hydraulique (16) est branché en parallèle avec le premier moteur hydraulique (7) et qu'un quatrième moteur hydraulique (17) est branché en parallèle avec le second moteur hydraulique (12), le premier moteur hydraulique (7) et le troisième moteur hydraulique (16) étant associé à un premier essieu du véhicule et le second moteur hydraulique (12) et le quatrième moteur hydraulique (17) étant associés à un second essieu du véhicule.

5. Dispositif d'entraînement hydrostatique selon la revendication 4, **caractérisé en ce que** le premier moteur hydraulique (7) et le troisième moteur hydraulique (16) ou le second moteur hydraulique (12) et le quatrième moteur hydraulique (17) peuvent être débranchés au moyen de soupapes de commutation (50, 51).

6. Dispositif d'entraînement hydrostatique selon la revendication 5, **caractérisé en ce que** les soupapes de commutation (50, 51) sont agencées de telle sorte que les moteurs hydrauliques débranchés (12, 17) sont alimentés avec une pression d'alimentation par l'intermédiaire d'un dispositif d'alimentation (22).

7. Dispositif d'entraînement hydrostatique comportant au moins une première pompe hydraulique et une seconde pompe hydraulique (2, 3) et au moins un premier moteur hydraulique et un second moteur hydraulique (7, 12), les moteurs hydrauliques (7, 12) entraînant des chaînes motrices respectivement séparées, les moteurs hydrauliques (7, 12) étant des moteurs hydrauliques doubles comportant chacun deux moteurs hydrauliques partiels (7a, 7b, 12a, 12b) et les pompes hydrauliques (2, 3) et les moteurs hydrauliques (7, 12) étant couplés entre eux dans un circuit hydraulique fermé, **caractérisé en ce qu'**un raccord d'entrée commun (6) des deux moteurs hydrauliques partiels (7a, 7b) du premier moteur hydraulique (7) est relié à un raccord de sortie (5) de la première pompe hydraulique (2), qu'un raccord de sortie (6a) du premier moteur hydraulique partiel (7a) du premier moteur hydraulique (7) est relié à un raccord d'entrée (9) de la seconde pompe hydraulique (3), qu'un raccord de sortie (6b) du second moteur hydraulique partiel (7b) du premier hydraulique (7) est relié à une borne d'entrée (14) de la première pompe hydraulique (2), qu'une borne d'entrée (11a) du premier moteur hydraulique partiel (12a) du second moteur hydraulique (12) est relié à un raccord de sortie (10) de la seconde pompe hydraulique (3), qu'un raccord d'entrée (11b) du second moteur hydraulique partiel (12b) du second moteur hydraulique (12) est relié au raccord de sortie (5) de la première pompe hydraulique (2), et qu'un raccord de sortie commun (13) des deux moteurs hydrauliques partiels (12a, 12b) du second moteur hydraulique (12) est relié au raccord d'entrée (9) de la seconde pompe hydraulique (3).

8. Dispositif d'entraînement hydrostatique selon la revendication 7, **caractérisé en ce**
**qu'**il est prévu en supplément un troisième moteur hydraulique (16) constitué par deux moteurs hydrauliques partiels (16a, 16b), et
un quatrième moteur hydraulique (17) constitué également par deux moteurs hydrauliques partiels (17a, 17b), et que les pompes hydrauliques (2, 3) et les troisième et quatrième moteurs hydrauliques (16, 17) sont couplés entre eux dans le circuit hydraulique fermé de telle sorte qu'un raccord d'entrée commun (18) des deux moteurs hydrauliques partiels (16a, 16b) du troisième moteur hydraulique (16) sont reliés à la borne de sortie (10) de la deuxième pompe hydraulique (3),
**qu'**un raccord de sortie (19a) du premier moteur hydraulique partiel (16a) du troisième moteur hydraulique (16) est relié au raccord d'entrée (9) de la seconde pompe hydraulique (3),
**qu'**un raccord de sortie (19b) du second moteur hydraulique partiel (16b) du troisième moteur hydraulique (16) est relié au raccord d'entrée (14) de la première pompe hydraulique (2),
**qu'**un raccord d'entrée (20a) du premier moteur hydraulique partiel (17a) du quatrième moteur hydraulique (17) est relié à la borne de sortie (10) de la seconde pompe hydraulique (3),
**qu'**un raccord d'entrée (20b) du second moteur hydraulique partiel (17b) du quatrième moteur hydraulique (17) est relié au raccord de sortie (5) de la première pompe hydraulique (2) et
**qu'**un raccord de sortie commun (21) des deux moteurs hydrauliques partiels (17a, 17b) du quatrième moteur hydraulique (17) est relié au raccord d'entrée (14) de la première pompe hydraulique (2).

9. Dispositif d'entraînement hydrostatique selon la revendication 8, **caractérisé en ce que** respectivement deux moteurs hydrauliques (7, 17; 12, 16) entraînent un essieu commun du véhicule.

10. Dispositif d'entraînement hydrostatique selon la revendication 7, **caractérisé en ce qu'**il est prévu un troisième moteur hydraulique (60), dont le raccord d'entrée (61) est relié au raccord de sortie (5) de la première pompe hydraulique (2) et dont le raccord de sortie (62) est relié au raccord d'entrée (9) de la deuxième pompe hydraulique (3).

11. Dispositif d'entraînement hydrostatique selon la revendication 10, **caractérisé en ce que** les premier et second moteurs hydrauliques entraînent un essieu commun du véhicule et que le troisième moteur hydraulique (60) entraîne üne autre roue du véhicule ou un autre essieu du véhicule.

12. Dispositif d'entraînement hydrostatique selon la revendication 10 ou 11, **caractérisé en ce que** le troisième moteur hydraulique (60) peut être débranché au moyen de soupapes de commutation (50, 51).

13. Dispositif d'entraînement hydrostatique selon la revendication 12, **caractérisé en ce que** les soupapes de commutation (50, 51) sont agencées de telle sorte que le moteur hydraulique débranché (60) est alimenté par une pression d'alimentation par l'intermédiaire d'un dispositif d'alimentation (22).

14. Dispositif d'entraînement hydrostatique selon l'une des revendications 7 à 13, **caractérisé en ce que** des soupapes de pontage (70, 71) sont prévues entre les raccords d'entrée (5, 10) et les raccords de sortie (14, 9) des pompes hydrauliques (2, 3) pour relier entre eux le cas échéant les raccords d'entrée (5, 10) et les raccords de sortie (14, 9) des pompes hydrauliques (2, 3).
